(19) Europäisches Patentamt
European Patent Office
Office européen des brevets

(11) EP 4 253 437 A1

(12) # EUROPEAN PATENT APPLICATION

(43) Date of publication:
**04.10.2023 Bulletin 2023/40**

(21) Application number: **22164617.7**

(22) Date of filing: **28.03.2022**

(51) International Patent Classification (IPC):
***C08F 255/02*** *(2006.01)*

(52) Cooperative Patent Classification (CPC):
(C-Sets available)
**C08F 255/02** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **EMPA Eidgenössische Materialprüfungs- und Forschungsanstalt**
**8600 Dübendorf (CH)**

(72) Inventors:
- **Koebel, Matthias**
  **8306 Brüttisellen (CH)**
- **NEMEC, Marek**
  **8600 Dübendorf (CH)**
- **Kuerten, Lilli**
  **8600 Dübendorf (CH)**
- **HAUSER, Stefanie**
  **8645 Jona (CH)**
- **MALFAIT, Wim**
  **8053 Zürich (CH)**
- **De Pietro, Jürg**
  **5210 Windisch (CH)**
- **Tsotra, Panagiota**
  **5000 Aarau (CH)**
- **George, Roula**
  **5210 Windisch (CH)**

(74) Representative: **Troesch Scheidegger Werner AG**
**Schwäntenmos 14**
**8126 Zumikon (CH)**

(54) **SILANE-BASED CROSSLINKING MIXTURE AND METHOD FOR CROSSLINKING THERMOPLASTIC POLYMERS**

(57) The present invention pertains to silane grafting mixtures for crosslinking a thermoplastic polymer, the mixtures comprising vinylsilanes, a radical initiator, a transition metal grafting catalyst, and optionally polysiloxanes. The present invention is further directed to associated methods for producing a pregraft compound and a crosslinked thermoplastic polymer with the silane grafting mixtures.

EP 4 253 437 A1

(52) Cooperative Patent Classification (CPC): (Cont.)

C-Sets
**C08F 255/02, C08F 230/085;**
**C08F 255/02, C08F 236/20**

## Description

The present invention pertains to silane grafting mixtures for crosslinking a thermoplastic polymer, the mixtures comprising vinylsilanes, a radical initiator, a transition metal grafting catalyst, and optionally polysiloxanes. The present invention is further directed to associated methods for producing a pregraft compound and a crosslinked thermoplastic polymer with the silane grafting mixtures.

Synthetic organic polymers such as thermoplastics (e.g. polyethylene (PE)) with their various applications represent volume-leading polymers in the global plastics industry. However, low operation temperature of thermoplastic materials does not allow their use in numerous applications such as hot water pipes that require resistance against continuous elevated temperatures or protective insulation sleeves for electrical cables, which require resistance against electrical overloading and fire resistant properties. Higher service temperatures of such polymers can be achieved by implementing a cross-linking step i.e. formation of bonds between the polymer chains, which results in cross-linked synthetic organic polymers, e.g. cross-linked polyethylene (commonly abbreviated as PEX or XLPE). Cross-linked structures may consist of either direct C-C bonds chemically introduced by peroxide cross-linking (e.g. PEX-a) or the less commonly used radiation induced cross-linking route using electron beam cross-linking (e.g. PEXc). The most cost-effective cross-linking strategy employs silane crosslinking (commonly referred to as PEX-b) which employs vinyl-functionalized silane-coupling agents, vinyltrimethoxysilane (VTMS) being the most common choice. Vinylsilanes contain a vinylic double bond (unsaturated hydrocarbon) and hydrolysable alkoxy groups all covalently bonded to a central silicon atom. The standard PEX-b consists of two stages: In a first step, vinyl groups of vinylalkoxysilane are grafted onto polymer chains via a peroxide-initiated free radical reaction. During this grafting step, the polymer is usually in the molten state. The second step includes cross-linking of silane alkoxy groups incorporated in the base polymer, often in the presence of a condensation catalyst (e.g. tin-based organometallic compounds such as DBTDL), via hydrolysis-condensation reaction. This step is carried out in a steam chamber or water bath at elevated temperature, where humidity or water migrates into the bulk of said polymer causing hydrolysis of alkoxy groups forming silanol (Si-OH) groups, which condense to form chemical crosslinks in the form of siloxane (Si-O-Si) linkages. As an example for pure crosslinked polyethylene, different modes of operation and conditions to carry out the above-described steps during the PEX-b production are commonplace in industry such as a two-step variant Sioplas® process described in e.g. US3646155A, or a more challenging one-step Monosil® process as described in e.g. US4117195A or the Visico process as described in e.g. EP3734617A1 which employs reactor premade silane pregraft polymers.

It is the objective of the present invention to provide means and methods for improved cross-linking materials and methods for synthetic organic polymers such as thermoplastic polymers.

In a first aspect, the present invention is directed to a silane grafting mixture for crosslinking a thermoplastic polymer, the mixture comprising:

(i) at least one of:

(ia) a monomeric vinylsilane of the formula $CH_2=CH-Si-(OR^1)_3$, and/or
(ib) a dimeric vinylsilane of the formula

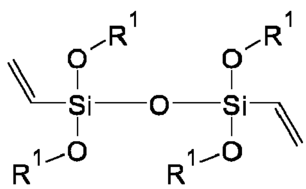
,

wherein $\mathbf{R^1}$ is selected from the group consisting of -Me, -Et, -nPr, -iPr, -nBu, -iBu, and -tBu;

(ii) a radical initiator, optionally an organic radical initiator, optionally an organic peroxide radical initiator, optionally dicumyl peroxide (DCP); and
(iii) a transition metal grafting catalyst, optionally a transition metal grafting catalyst comprising a transition metal selected from the group consisting of Ti, V, Zr, Hf, Bi, and Fe.

In the context of the present invention, the expression "silane grafting mixture" refers to the mixture as defined herein by its components which is suitable for and can be used to react with a thermoplastic polymer by radical initiator-promoted reaction of a vinyl group with a carbon atom, optionally a back bone carbon atom of the synthetic organic polymer to form a covalent bond. In this disclosure, the reaction of a vinyl group covalently attached to a silane /

polysiloxane unit and the carbon atom of the synthetic organic polymer is called "silane grafting".

The term "thermoplastic polymer" is used herein as commonly understood in the art. After crosslinking of the thermoplastic polymer (starting material), depending on the specific process conditions, the resulting crosslinked polymer may optionally no longer be thermoplastic but is herein still referred to as "(crosslinked) thermoplastic material" for reasons of easier reading. Optionally, the thermoplastic polymer is a thermoplastic polymer with a carbon-carbon backbone consisting of $-(CH_2-CH(R^6))-$ repeat units, wherein each $R^6$ is independently selected from -H, -Cl, -methyl, -ethyl, linear or branched -propyl, linear or branched -butyl, -phenyl, -CN and $-O-(C=O)-R^7$, wherein $R^7$ is selected from $-CH_3$, $-CH_2CH_3$, $-CH(CH_3)_2$, $-CH_2CH_2CH_3$, $-C(CH_3)_3$,$-CH_2CH_2CH_2CH_3$ and $CH_2CH_2CH(CH_3)_2$.

Exemplary thermoplastic polymers include polyolefins, optionally linear or branched polyethylene (including, e.g. low-density polyethylene, linear low-density poylethylene and highdensity polyethylene), polyvinylchloride, polypropylene, polyvinyl acetate, polybutylene, polyisobutylene, polyvinyl esters (e.g. polyvinyl acetate), polyacrylonitrile, polymethylpentene, poly-(ethylene-co-vinyl acetate) and random tacticity, sequence or block co-polymers of these, as well as the thermoplastic polymers detailed below.

The radical initiator for use in the present mixture can be any radical initiator which promotes the reaction of a vinyl group (e.g. of the vinylsilane) with a carbon atom (e.g. a carbon atom of the back bone) of the thermoplastic polymer. These radical initiators are known in the art and the skilled person finds no difficulties in identifying a suitable radical initiator.

The transition metal grafting catalyst for use in the present invention is any catalyst that is based on a transition metal which improves the grafting of the vinylsilane onto the polymer. Exemplary transition metal catalysts for use as transition metal grafting catalysts include, for example, those transition metal catalysts used as rearrangement, curing or polymerization catalysts for organic polymers or for curing of polymeric binders. The skilled person can determine whether a transition metal catalyst is a transition metal grafting catalyst for use in the present invention by conducting the experiment in Example 7, wherein an at least 10%, optionally at least 20% lower hot-set value is achieved at the same total silane loading when the catalyst is used (compared to no catalyst). Optional transition metal grafting catalysts are transition metal grafting catalyst comprising a transition metal selected from the group consisting of Ti, Zr, and Hf.

The transition metal grafting catalyst for use in the present invention can be, e.g., selected from a group of compounds with one of the following sum formulae

| | |
|---|---|
| $M(II)L_1L_2$ | for metal ions in the oxidation state +2 such as $Fe^{+2}$ |
| $M(III)L_1L_2L_3$ or $O=M(III)L_1$ | for metal ions in the oxidation state +3 such as $Fe^{+3}$ |
| $M(IV)L_1L_2L_3L_4$ or $O=M(IV)L_1L_2$ | for metal ions in the oxidation state +4 such as $Ti^{+4}$ or $Hf^{+4}$ |
| $M(V)L_1L_2L_3L_4L_5$ or $O=M(V)L_1L_2L_3$ | for metal ions in the oxidation state +5 such as $V^{+5}$ |

wherein M(II, III, IV, IV) is a transition metal ion selected from of Ti, V, Zr, Hf, Bi, and Fe in an oxidation state +2 to +5 and bonded by covalent, ionic or coordination bonds or a combination thereof to identical or non-identical coordinating counterions and / or ligands $L_1$ to $L_5$, where at least one of these ligands is selected from the group of halides (e.g. $F^-$, $Cl^-$, $Br^-$, $I^-$), pseudohalides (e.g. $SCN^-$, $N_3^-$, $CN^-$) , chalcogenides, mineral acid counterions, organic carboxylates, organic alcoholates, acetylacetonates, organic sulfonic or phosphonic acid counterions.

Further exemplary transition metal grafting catalysts for use in the present invention are selected from the group consisting of

- $Ti(IV)(OR^7)_4$ and $Zr(IV)(OR^7)_4$;
- $Ti(IV)X_4$ and $Zr(IV)X_4$;
- $O=Ti(IV)X_2$ and $O=Zr(IV)X_2)$;
- $Ti(IV)X_2(OR^7)_2$ and $Zr(IV)X_2(OR^7)_2$;
- $Ti(IV)X_2(OAcAc)_2$ and $Zr(IV)X_2(OAcAc)_2$;
- $Ti(IV)(OSi(CH_3)_3)_4$ and $Zr(IV)(OSi(CH_3)_3)_4$;
- $(R^7O)_2Ti(IV)(OAcAc)_2$ and $(R^7O)_2Zr(IV)(OAcAc)_2$;
- $O=Ti(IV)(OAcAc)_2$ and $O=Zr(IV)(OAcAc)_2$;
- $Ti(IV)(OAc)_4$ and $Zr(IV)(OAc)_4$;
- $Ti(IV)(OAc)_2(OR^7)_2$ and $Zr(IV)(OAc)_2(OR^7)_2$; and
- $O=Ti(IV)(OAc)_2$ and $O=Zr(IV)(OAc)_2$;

wherein $R^7$ is as defined above and wherein X is a halide, a pseudohalide, nitrate, chlorate or perchlorate anion.

Exemplary transition metal grafting catalysts include Titanium tetrachloride, Titanium(IV) isopropoxide, Titanium(IV) ethoxide, Titanium(IV) n-butoxide, Titanium(IV) iso-butoxide, and Titanium(IV) tert-butoxide.

In the context of the present invention it is understood that antecedent terms such as "linear or branched"

indicate that each one of the subsequent terms is to be interpreted as being modified by said antecedent term. For example, the scope of the term "linear or branched alkyl, alkenyl or alkynyl" encompasses linear or branched alkyl; linear or branched alkenyl; and linear or branched alkynyl; For example, the term "$C_{3-14}$ alkyl, $C_{3-14}$ alkenyl and $C_{3-14}$ alkynyl" indicates the group of compounds having 3 to 14 carbons and alkyl, alkenyl or alkynyl functionality. The expression "alkyl" refers to a saturated, straight-chain or branched hydrocarbon group that contains the number of carbon items indicated, e.g. linear or branched "$(C_{3-14})$alkyl" denotes a hydrocarbon residue containing from 3 to 14 carbon atoms, e.g. a propyl, *iso*-propyl, *n*-butyl, *iso*-butyl, *sec*-butyl, *tert*-butyl, *n*-pentyl, *iso*-pentyl, *n*-hexyl, 2,2-dimethylbutyl, etc. If an alkyl chain is characterized by a name that allows for linear or branched isomers, all linear or branched isomers are encompassed by that name. For example, "butyl" encompasses n-butyl, *iso*-butyl, sec-butyl and tert-butyl. As used herein, a wording defining the limits of a range of length such as, e. g., "from 1 to 5" or "$(C_{1-5})$" means any integer from 1 to 5, i.e. 1, 2, 3, 4 and 5. In other words, any range defined by two integers explicitly mentioned is meant to comprise and disclose any integer defining said limits and any integer comprised in said range. The scope of the present invention includes those analogs of the compounds as described herein and in the claims that feature the exchange of one or more carbon-bonded hydrogens, optionally one or more aromatic carbon-bonded hydrogens, with halogen atoms such as F, Cl, or Br, optionally F.

It was surprisingly found that the presence of a transition metal grafting catalyst in a mixture comprising vinylsilane and radical initiator provides a silane grafting mixture that is highly efficient for grafting vinylsilanes onto thermoplastic polymers in which the amount of vinylsilane required for creating a given amount of a crosslinked thermoplastic polymer can be significantly reduced while achieving the same number of grafted vinylsilanes on the polymer and eventually the same application relevant (hot set test) performance.

Specifically, the grafting efficiency of vinylsilanes is increased by the presence of Group 4 transition metal compounds. It was found that the addition of, for example 400ppm, Titanium (IV) isopropoxide to a ready-made silane grafting solution yielded much better grafting performance. The corresponding graft compounds were then extruded with a condensation catalyst (DBTDL) masterbatch and cooked over 6 h in a water bath at 90 °C. The corresponding PEX-b materials showed significantly improved hot set data and better mechanical data at equivalent hot-set performance when compared to the reference compounds produced without the grafting catalyst.

In an embodiment, the silane grafting mixture of the present invention further comprises an oligomeric vinylsilane according to the formula:

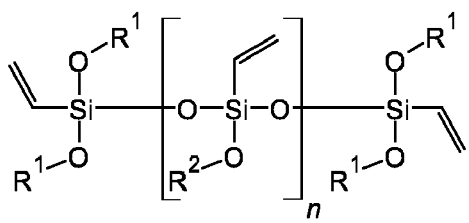

and/or a cyclic oligomeric vinylsilane according to the formula:

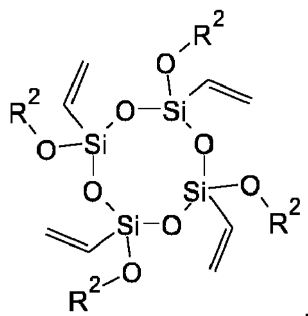

,

wherein $\mathbf{R^2}$ is selected from $R^1$,

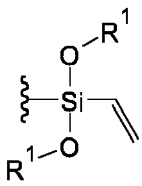 and 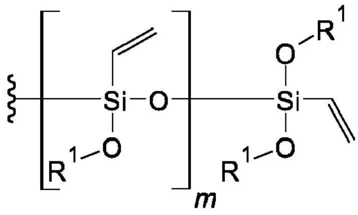 ,

n is an integer from 1 to 10 and m is an integer from 1 to 4.

In an embodiment, the silane grafting mixture of the present invention further comprises a polysiloxane material comprising

a. non-organofunctional Q-type siloxane moieties selected from the group consisting of:

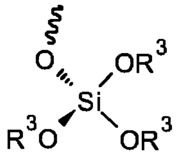 , 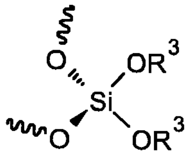 , 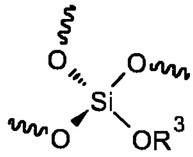 and 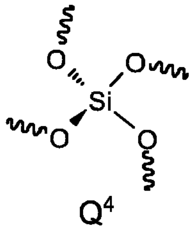 ;

$Q^1$ $Q^2$ $Q^3$ $Q^4$

b. optionally tri-organofunctional M-type siloxane moieties selected from the group consisting of:

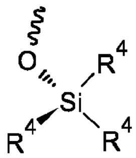 ,

M

c. optionally di-organofunctional D-type siloxane moieties selected from the group consisting of:

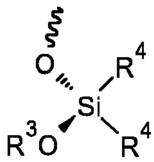 and 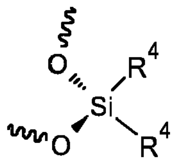 ,

$D^1$ $D^2$

and

d. mono-organofunctional T-type siloxane moieties selected from the group consisting of:

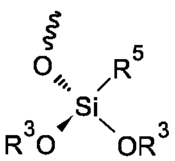 , 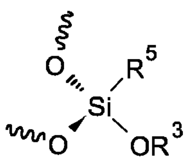 and 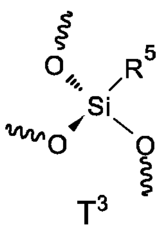 ;

$T^1$ $T^2$ $T^3$

wherein

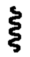 indicates a covalent siloxane bond to a silicon atom of another Q-, M-, D- and/or T-type moiety as defined in (a), (b), (c) and/or (d);

**$R^3$** is independently selected from the group consisting of methyl, ethyl and propyl, optionally methyl and ethyl;
**$R^4$** is independently selected from the group consisting of methyl, ethyl, phenyl, cyclohexyl, vinyl, and cyclopentadienyl; and
**$R^5$** is independently selected from the group consisting of $R^4$, linear or branched $C_{3-14}$ alkyl, $C_{3-14}$ alkenyl and $C_{3-14}$ alkynyl.

For example, the polysiloxane material described herein for all aspects can be of a core-shell structure, wherein the core is composed of a majority of Q-type moieties and has a different composition than the shell, which is composed primarily of T-type moieties, and optionally further comprises M- and D-type moieties. The term "core-shell", as used herein, is commonly understood in the art (see, e.g., Nanoscale, 2010, 2, 829-843 or Nanoscale, 2011, 3, 5120-5125).
It was surprisingly found that the combination of the transition metal grafting catalyst with the polysiloxane material described herein in the mixture comprising vinylsilane and radical initiator leads to a further and synergistic improvement in high temperature material behavior observed in such cured graft polymers.
In an embodiment, the polysiloxane material in the silane grafting mixture of the present invention is one, wherein:

the degree of polymerization of the Q-type alkoxy-terminated moieties $DP_{Q\text{-type}}$ is in the range of 1.3 to 2.7;
the degree of polymerization of the D-type alkoxy-terminated siloxane moieties $DP_{D\text{-type}}$ is in the range of 1.0 to 1.9;
the degree of polymerization of the T-type alkoxy-terminated siloxane moieties $DP_{T\text{-type}}$ is in the range of 1.1 to 2.7;
the total content of tri-organofunctional M-type siloxane moieties (b) in the polysiloxane material does not exceed 10 mol-%, optionally does not exceed 5 mol-%;
the total content of di-organofunctional D-type siloxane moieties (c) in the polysiloxane material does not exceed 5, 10, or 15 mol-%;
the material has a viscosity in the range of 3 to 5000 cP, optionally 4 to 1000 cP, optionally 5 to 100 cP;
the material comprises less than 5, 2.5, 2, 1.5, 1 or 0.5 mol-% silanol groups (Si-OH); and/or
the atomic ratio of T- to Q-moieties in the material is in the range of 0.01:1 to 1:1.

All mol-% numbers described herein for the polysiloxane material - unless specifically mentioned otherwise - are defined by the sum of all D-, M- or T-type silicon atoms divided by the sum of all silicon atoms in the material, e.g. as measured by means of quantitative $^{29}$Si-NMR.
For example, a typical polysiloxane material for use in the present invention may also comprise Q-, T-, D- and/or M-type silane monomers ($Q^0$, $T^0$, $D^0$, $M^0$), e.g. in smaller molar quantities compared to the $Q^n$, $T^n$, $D^n$ and $M^n$, with $n \geq 1$, moieties, in other words, the total molar siloxane content must be higher than the total molar silane monomer content, excluding HMDSO which may be present in any amounts, also as a monomer, e.g. also as a solvent or cosolvent. Similarly, the material may optionally contain substantial fractions of smaller oligomers, for example a mixture of oligomers that spans a range from, e.g. dimer to pentamer polysiloxanes, optionally also featuring mixed Q-T and optionally Q-D bonding modes.
The polysiloxane material for use in the present invention comprises less than 5, 2.5, 2, 1.5, 1 or 0.5 mol-% silanol groups (Si-OH), this means that the $OR^1$ moieties of Q-, T- or D-type silanes are -OH groups to this extent.
If a polysiloxane material exhibits M-type moieties, this generally leads to an increase in $DP_{Qtype}$. Therefore, the optional limit of $DP_{Qtype}$ in all materials disclosed herein is to be raised by 0.05 or optionally 0.1 DP units if the amount of M-type modification exceeds 5 mol-% or optionally 10mol-%.
The degree of polymerization DP for any non-crystalline silicon oxide material (and specifically for the polysiloxane material and for the corresponding methods and uses described herein) is defined here as the ratio of bridging oxygens BO (# of Si-O-Si bonds) to the total number of metal atoms $Si_{tot}$ in the system.
$DP_{Q\text{-type}}$, $DP_{T\text{-type}}$ and $DP_{D\text{-type}}$ of the polysiloxane material can be directly obtained from quantitative $^{29}$Si-NMR data according to:

$$DP_{Q\text{-type}} = \Sigma(n\ A_{Qn}) / \Sigma(A_{Qn}) = (A_{Q1} + 2\ A_{Q2} + 3\ A_{Q3} + 4\ A_{Q4}) / (A_{Q0} + A_{Q1} + A_{Q2} + A_{Q3} + A_{Q4});$$

$$DP_{T\text{-type}} = \Sigma(n\ A_{Tn}) / \Sigma(A_{Tn}) = (A_{T1} + 2\ A_{T2} + 3\ A_{T3}) / (A_{T0} + A_{T1} + A_{T2} + A_{T3})$$

for general T-type silanes; and

$$DP_{D\text{-type}} = \Sigma(n\ A_{Dn}) / \Sigma(A_{Dn}) = (A_{D1} + 2\ A_{D2}) / (A_{D0} + A_{D1} + A_{D2}).$$

In the above equation for $DP_{Q\text{-type}}$, the terms $A_{Qn}$ denote the quantitative $^{29}$Si-NMR peak area related to that $Q^n$ moiety (spectral signature), which is a Si atom coordinated by n siloxane bonds through bridging oxygen (BO) atoms, that connect it to its next-nearest-neighbor Si atoms and (4-n) non-bridging oxygen (NBO) atoms which are linked to terminal alkoxy groups Si-OR as defined herein. Analogously, $A_{Tn}$ and $A_{Dn}$ denote the $^{29}$Si-NMR peak areas corresponding to the respective T-type and D-type moieties (spectral signatures).

Generally, parameters that define the polysiloxane material described herein can be measured using standard analytical tools: The content of hydroxy groups in the material can be determined, e.g., using $^{29}$Si- and/or $^{1}$H-NMR spectroscopy and Karl Fischer titration. The molar ratio of ethoxy and methoxy terminal alkoxy units in the material are directly accessible from $^{13}$C-NMR and independently from $^{29}$Si-NMR data. The characterization of the reaction products in terms of viscosity is readily analyzed by means of standardized viscosity measurements such as a cylindrical rotation viscometer according to, e.g., ASTM E2975-15: "Standard Test Method for Calibration of Concentric Cylinder Rotational Viscometers". Other viscosity test methods are also possible such as, e.g., Staudinger-type capillary viscometers or modern, dynamic viscometry methods. The sample preparation is generally relevant in determining the true viscosity of the polysiloxane material as already low percentage amounts of monomers and/or solvent residues significantly impact the measured values. For this purpose, a viscosity measurement is typically done on a polymeric sample material, i.e. a material essentially consisting of a polymeric material, which has previously been purified. Purification can be done, e.g. by means of a thin film evaporator setup at, e.g. 150°C, with a vacuum, e.g. < $10^{-1}$ mbar, which separates monomers and low molecular oligomers from the polysiloxane material itself (see Macromolecules 2006, 39, 5, 1701-1708).

To determine, if a material is itself or comprises a polysiloxane material as described herein, the following exemplary method of analysis can be used. First a sample of a material to be tested is subjected to a thin film evaporator purification step at 150°C at $10^{-1}$mbar vacuum level until the amount of low molecular volatiles no longer changes by more than 1% over a given time interval. The resulting purified material is then analyzed by means of $^{29}$Si NMR spectroscopy. The corresponding $DP_{Qtype}$ and $DP_{Ttype}$ values are then calculated from the measured spectra as well as the Q:T atomic ratio and used to determine if they fall within the range specified herein. If this is the case the material at least comprises such a polysiloxane material. Analysis of the native sample prior to the thin film evaporator purification step can then be taken and analyzed side by side. If the difference in measured $DP_{Qtype}$ values between original and purified samples is less than 5%, for the sake of this rapid test, the original sample itself shall qualify as a polysiloxane material as described herein.

Methods of manufacturing the polysiloxane material are known in the art, see e.g. WO2019/234062A1, WO2021/115646, WO2021/116333, and WO2021/116334.

In an embodiment, the silane grafting mixture according to the present invention is one, wherein said mixture comprises at least 75 mol%, optionally at least 85% optionally at least 93% monomeric vinylsilane of the formula $CH_2$=CH-Si($OR^1$)$_3$ and optionally wherein the total amount of oligomeric and/or dimeric vinylsilanes relative to all vinylsilanes in the grafting mixture is about or less than 20 mol%, 10 mol%, or 5 mol%.

The amount of vinylsilanes can be determined, e.g., by $^{29}$Si NMR spectroscopy, gas chromatography (GC-MS) or a combination thereof.

In an embodiment, the silane grafting mixture according to the present invention is one, wherein the grafting mixture comprises at least 30 mol-ppm, optionally at most 10'000 mol-ppm, optionally between 100 to 1000 mol-ppm of the transition metal grafting catalyst, wherein the mol-ppm are relative to the total mol number of Si atoms in the silane grafting mixture.

The total molarity (mol number) of Si atoms in the silane grafting mixture can be determined, e.g., by $^{29}$Si NMR spectroscopy, gas chromatography (GC-MS), HPLC or a combination thereof, and the amount of transition metal catalyst can be determined, e.g. by atomic adsorption spectroscopy (AAS), atomic emission spectroscopy (AES), ICP-MS or other metal selective analytical techniques such as, e.g. MALDI-TOF or laser ablation mass spectroscopy.

In another aspect, the present invention is directed to a method for producing a pregraft compound comprising the steps of:

(a) providing a composition comprising at least one thermoplastic polymer, optionally at least one polyolefin, a polyvinyl ester or mixtures thereof,
(b) adding the silane grafting mixture as described herein, and
(c) mixing the components of (a) and (b) to form a pregraft compound, wherein part or substantially all of the vinyl groups of the silane grafting mixture form a covalent bond with the carbon atoms of the at least one thermoplastic polymer.

The definitions of the thermoplastic polymer provided above also apply to the thermoplastic polymer in the context of the present method, including all exemplary polymers. For all aspects and embodiments disclosed herein, the term "pregraft" or "pregraft compound" can be used interchangeably with "graft" or "graft compound".

The amounts of silane grafting mixture is routinely adjusted by the skilled person depending on the degree of grafting / subsequent cross-linking that is desired. Exemplary non-limiting ratios of vinylsilane in the grafting mixture include 85-92% vinylsilane monomer in the silane blend, 50-70% vinylsilane monomer and 25-45% of dimeric and oligomeric vinylsilanes in the blend, or 75-85% of vinylsilane monomer.

The vinylsilane(s) of the silane grafting mixture will react with a (or more) carbon atom(s) of the polymer and form a covalent bond during step (c). Optionally, the reaction of the vinyl silane occurs at the back bone of the polymer. Depending on the ratio between silane grafting mixture and the reaction conditions all or only part of the vinyl groups will react. This can be routinely adjusted by the skilled person using common general knowledge and routine experiments.

In an exemplary non-limiting method, the polymer and the silane grafting mixture are molten and then mixed in step (c). Molten means that substantially all polymer components and vinylsilane components are in a liquid state. Exemplary temperatures for melting the material range from 140 to 240, optionally 165 to 255, optionally 175 to 215 °C. Mixing can be done by stirring, agitation, kneading or compounding, e.g. in a suitable extruder, compounder (e.g. twinscrew compounder) or kneader. Exemplary mixing times can range from 10 s to 30 min, optionally from 30 sec to 5 min.

After mixing, the reaction mixture can be solidified and optionally granulated, as well as stored for further reaction.

It was found that the addition of a grafting catalyst to a vinylsilane / peroxide blend already leads to a significant improvement in hot-set performance as can be seen from the comparison of examples 1 and 2. Yet the grafting catalyst performance can be further enhanced by adding higher molecular vinylsilane oligomers or vinylsiloxanes. The addition of a vinylsiloxane in examples 3 and 4 surprisingly brought a substantial improvement in performance in terms of both hot-set values and elastic moduli of cured and crosslinked PE resins. Also in filled systems such as, e.g., halogen-free flamer retardant (HFFR) formulations, the use of vinylsiloxanes and/or oligomeric vinylsilanes significantly improves mechanical properties of the final material. However it was found in all formulations that the use of a vinylsiloxane without the presence of monomer or small oligomeric vinylsilanes have inferior properties, again underlining the synergistic interplay between monomeric vinylsilane, grafting catalyst and at least an oligomeric vinylsilane or a vinylsiloxane.

In an embodiment, the present method is one, wherein the transition metal grafting catalyst is present in steps (b) and (c) in an amount of 0.1 to 100 mg, optionally 0.2 to 60 mg, optionally 0.25 to 25 mg per kg of total amount of polymeric material in the pregraft compound (it is noted that the mg/kg unit corresponds to mass-ppm).

The total amount of polymeric material refers to the combined amount of thermoplastic polymer plus any further organic and/or naturally occurring polymers that may be comprised in the mixture, e.g. the sum of all LLDPE used to prepare and XLPE graft compounds or e.g. the sum of total polymer (EVA + PE, ca. 35% of total mass) in a standard magnesium and/or aluminum hydroxide filled (ca. 65% of total mass) HFFR compound. Other types of polymer phase constituents may include high viscosity polydimethylsiloxane (PDMS), or chemically modified polyolefins such as ultra low density polyethylene functionalized with maleic anhydride (ULDPEg-MAH, e.g. Fusabond N525 (DOW Inc.), a maleic anhydride grafted C2-C8 ULDPE copolymer) or similarly modified thermoplastic polymers.

In an embodiment, the present method is one, wherein the at least one thermoplastic polymer is selected from polyethylene, optionally linear low density polyethylene (LLDPE), polypropylene, polybutylene, polyisobutylene, polymethylpentene, poly(ethylene-co-vinyl acetate), polyvinyl acetate, polyvinylchloride, polyacrylonitrile, optionally C4-LLDPE (e.g. Flexirene CL10U, Versalis), C6-mLLDPE (e.g. Exceed 3518 / Exceed 3812, Exxon Mobil or Evolue SP1071C, Prime Polymer), C8-ultra low density polyethylene (C8-ULDPE, e.g. Engage 8450, DOW Inc.), C4-very low density polyethylene (C4-VLDPE, e.g. Clearflex MBQ0, Versalis), Heterophasic polypropylene-ethylene-propylene rubber (PP-EPR, e.g. Hifax CA10A, Lyndell Basell), PE/PP copolymer (e.g. Vistamaxx 6202, Exxon Mobil or Versify 3000, DOW), ethylene acrylic elastomer (AEM) (e.g. Vamac DP, DuPont), and mixtures thereof.

In an embodiment, the present method is one, wherein the method further comprises at least one of the steps:

(d) adding and mixing a stabilizer and/or an antioxidant, optionally an organo-phosphite stabilizer and/or a phenolic antioxidant, and/or
(e) forming an extruded or molded part with the mixture of (c) or (d).

In an embodiment, the present method is one, wherein the method further comprises the steps of adding a condensation catalyst, optionally an organometallic tin(IV)-based condensation catalyst, optionally dibutyl tin dilaurate (DBTDL), optionally an organosulfonic acid condensation catalyst, optionally during step (b) or (c), optionally during step (d) or (e).

The optional condensation catalyst can be useful in the later cross-linking step to accelerate the formation of the Si-O-Si bonds between the grafted silane units.

Exemplary organosulfonic acid condensation catalysts include methanesulfonic acid, benzenesulfonic acid, toluenesulfonic acid, 4-aminotoluene-3-sulfonic acid and exemplary amounts of the catalyst range from 10 to 10000ppm,

optionally from 30 to 1000ppm by weight of the total polymer material present (the combined amount of thermoplastic polymer plus any further organic and/or naturally occurring polymers as defined above).

In another aspect, the present invention is directed to a method for producing a composition comprising at least one crosslinked thermoplastic polymer, optionally a crosslinked polyolefin and/or polyvinyl ester, comprising the method steps as described herein, wherein the method further comprises the step of exposing the extruded part or molded part of step (e) to water, optionally at temperatures of about 60 to 100 °C, to crosslink the at least one thermoplastic polymer.

Of course, the material of step (c) of the method described herein can also be exposed to water, optionally at temperatures of about 60 to 100 °C, to crosslink the at least one synthetic organic polymer.

In another embodiment, the present method is one, wherein during steps (b) or (c) at least one filler is added, wherein the filler optionally comprises at least one component selected from the group consisting of aluminum hydroxide, magnesium hydroxide, talcum, chalk, wollastenite, huntite, boehmite and calcium carbonate, and/or
wherein the composition of step (a) comprises

(i) polyethylene, optionally linear low density polyethylene (LLDPE), polypropylene, polybuten, polyisobutylene, polymethylpentene, and
(ii) a polymer selected from the group consisting of polyvinyl acetate, poly(ethylene-co-vinyl acetate), polyvinylchloride, polyvinylalcohol, and polyvinylbutyral.

In another aspect, the present invention is directed to a pregraft compound, optionally an extruded or molded pregraft compound, obtained or obtainable by the method described herein.

In another aspect, the present invention is directed to a composition comprising at least one crosslinked thermoplastic polymer, optionally a crosslinked polyolefin and/or polyvinyl ester, obtained or obtainable by the method described herein.

The following Figures and Examples serve to illustrate the invention and are not intended to limit the scope of the invention as described in the appended claims.

## Examples

**Example 1** deals with the production of a PE pregraft compound made from LLDPE (linear low-density polyethylene, BPD 3642, Ineos) pellets and Dynasylan® Silfin 13 Evonik industries (a ready to use monomeric vinylsilane / dicumylperoxide blend) with a total silane content of a) 0.6 parts per hundred rubber (phr), b) 0.7 phr, c) 0.8 phr, d) 0.9 phr and e) 1.0 phr.

**Example 1a:** 1986.7 g of LLDPE pellets were mixed with 13.3 g of Dynasylan® Silfin 13 (consisting of 90 wt% of VTMS (vinyltrimethoxysilane) and 10 wt% of dicumyl peroxide) by shaking in a plastic bag for 3 minutes. The feed polymer doped with the Silfin 13 grafting system was gravimetrically dosed into a twin screw ZK35, 32D compounder (Collin) with compounding speed of 15 kg/h. A pregraft compound made up of pellets with a total silane content of 0.6 phr was collected.

**Example 1b:** 1984.4 g of LLDPE pellets and 15.6 g of Dynasylan® Silfin 13 were mixed and dosed into twin screw ZK35, 32D compounder (Collin) analogously to Example 1 a). A pregraft compound made up of pellets with a total silane content of 0.7 phr was collected.

**Example 1c:** 1982.2 g of LLDPE pellets and 17.8 g of Dynasylan® Silfin 13 were mixed and dosed into twin screw ZK35, 32D compounder (Collin) analogously to Example 1 a). A pregraft compound made up of pellets with a total silane content of 0.8 phr was collected.

**Example 1d:** 1980.0 g of LLDPE pellets and 20.0 g of Dynasylan® Silfin 13 were mixed and dosed into twin screw ZK35, 32D compounder (Collin) analogously to Example 1 a). A pregraft compound made up of pellets with a total silane content of 0.9 phr was collected.

**Example 1e:** 1977.8 g of LLDPE pellets and 22.2 g of Dynasylan® Silfin 13 were mixed and dosed into twin screw ZK35, 32D compounder (Collin) analogously to Example 1 a). A pregraft compound made up of pellets with a total silane content of 1.0 phr was collected.

**Example 2** details the production of a PE pregraft compounds consisting of LLDPE pellets, 2.5 wt ppm of TTIP (titanium isopropoxide) and Dynasylan® Silfin 13 (Evonik industries) with a total silane content of a) 0.6 phr and b) 0.9 phr

**Example 2a:** 1986.5 g of LLDPE pellets, 13.3 g of Dynasylan® Silfin 13 and 500mg of a 1% by weight TTIP solution in ethanol were mixed and dosed into twin screw ZK35, 32D compounder (Collin) analogously to Example 1 a). A pregraft compound made up of pellets with a total silane content of 0.6 phr and 2.5 wt ppm of TTIP in the polymeric material was collected.

**Example 2b:** 1979.9 g of LLDPE pellets, 20.0 g of Dynasylan® Silfin 13 and 500mg of a 1% by weight TTIP solution in ethanol were mixed and dosed into twin screw ZK35, 32D compounder (Collin) analogous to Example 1 a). A pregraft compound made up of pellets with a total silane content of 0.9 phr and 2.5 wt ppm of TTIP in the polymeric material was

collected.

**Example 3** details the production of PE pregraft compound consisting of LLDPE pellets and a vinylsilane/siloxane mixture (comprising Dynasylan® Silfin 13, additional DCP and a TTIP-free vinyl-polysiloxane) with a total content of TTIP of 0.5 wt ppm and total silane/siloxane content of a) 0.63 phr and b) 0.95 phr in the final compounds. First, a vinyl-silane/-siloxane grafting blend was prepared by dissolving 0.3 g dicumyl peroxide in 66.7 g of Dynasylan® Silfin 13 and 3.0 g of a vinyl-functional Q-T polysiloxane with $DP_Q_{type}$ and $DP_T_{type}$ of 2.04 and 1.88 respectively and a molar Si atomic ratio of $n_{Qtype} : n_{Ttype}$ = 1:0.15 without TTIP present.

**Example 3a:** 1986.0 g of LLDPE pellets and 14 g of above prepared vinylsilane/siloxane grafting blend (Example 3) and 100mg of a 1% by weight solution of TTIP in Ethanol were mixed and dosed into twin screw ZK35, 32D compounder (Collin) analogously to Example 1 a). A pregraft compound made up of pellets with the total silane content of 0.63 phr and 0.5 wt ppm of TTIP in the total amount of polymeric material was collected.

**Example 3b:** 1979.0 g of LLDPE pellets and 21 g of above prepared vinylsilane/siloxane grafting blend (Example 3) and 100mg of a 1% by weight solution of TTIP in Ethanol were mixed and dosed into a twin screw ZK35, 32D compounder (Collin) analogously to Example 1 a). A pregraft compound made up of pellets with the total silane content of 0.95 phr and 0.5 wt ppm of TTIP in the total amount of polymeric material was collected.

**Example 4** details the production of PE pregraft compound consisting of LLDPE pellets and a vinylsilane/siloxane mixture (comprising Dynasylan® Silfin 13, additional DCP and a vinylpolysiloxane containing TTIP) and a total content of TTIP of 1.25 and 1.95 wt ppm and total silane/siloxane content of a) 0.63 phr and b) 0.95 phr in the final polymer graft compounds, respectively. First, a vinyl-silane/-siloxane grafting blend was prepared by dissolving 0.3 g dicumyl peroxide in 66.7 g of Dynasylan® Silfin 13 and 3.0 g of a vinyl-functional Q-T polysiloxane with $DP_Q_{type}$ and $DP_T_{type}$ of 2.04 and 1.88 respectively and a molar Si atomic ratio of $n_{Qtype} : n_{Ttype}$ = 1:0.15 with a selected amount of TTIP present.

**Example 4a:** 1986.0 g of LLDPE pellets and 14 g of above prepared vinylsilane/siloxane grafting blend (Example 4) were mixed and dosed into twin screw ZK35, 32D compounder (Collin) analogously to Example 1 a). A pregraft compound pellets with the total silane content of 0.63 phr and 0.5 wt ppm of TTIP in the total amount of polymeric material was collected.

**Example 4b:** 1979.0 g of LLDPE pellets and 21 g of g of above prepared vinylsilane/siloxane grafting blend (Example 4) were mixed and dosed into twin screw ZK35, 32D compounder (Collin) analogously to Example 1 a). A pregraft compound pellets with the total silane content of 0.945 phr and 0.5 wt ppm of TTIP in the total amount of polymeric material was collected.

**Example 5** details the production of PE pregraft compound consisting of LLDPE pellets and a monomeric & oligomeric vinylsilane mixture (comprising Dynasylan® Silfin 13 and an oligomeric vinylsilane Dynasylan® 6490). First, a monomeric & oligomeric vinyl-silane grafting blend was prepared by mixing 65.8 g of Dynasylan® Silfin 13 and 14.2 g of oligomeric vinylsilane Dynasylan® 6490.

**Example 5a:** 1986.5 g of LLDPE pellets, 13.3 g of the above mentioned vinylsilane monomer / oligomer mixture (Example 5) and 360mg of a 1% Titanium (IV) t-butoxide (TTB) solution in vinyltrimethoxysilane (VTMO) were mixed and dosed into twin screw ZK35, 32D compounder (Collin) analogously to Example 1 a). A pregraft compound made up of pellets with a total silane content of 0.6 phr and 1.8 wt ppm of TTB in the polymeric material was collected.

**Example 5b:** 1979.9 g of LLDPE pellets, 16.6 g of the above mentioned vinylsilane monomer / oligomer mixture (Example 5) and 360mg of a 1% Titanium (IV) t-butoxide (TTB) solution in vinyltrimethoxysilane (VTMO) were mixed and dosed into twin screw ZK35, 32D compounder (Collin) analogous to Example 1 a). A pregraft compound made up of pellets with a total silane content of 0.75 phr and 1.8 wt ppm of TTIP in the polymeric material was collected.

**Example 5c:** 1979.9 g of LLDPE pellets, 20.0 g of the above mentioned vinylsilane monomer / oligomer mixture (Example 5) and 360mg of a 1% Titanium (IV) t-butoxide (TTB) solution in vinyltrimethoxysilane (VTMO) were mixed and dosed into twin screw ZK35, 32D compounder (Collin) analogous to Example 1 a). A pregraft compound made up of pellets with a total silane content of 0.9 phr and 1.8 wt ppm of TTIP in the polymeric material was collected.

**Example 6:** a) production of additive Masterbatch made of LLDPE, Irganox 1010 (pentaerythritol tetrakis(3-(3,5-di-tert-butyl-4-hydroxyphenyl)propionate), Irgafos 168 (tris(2,4-di-tert.-butylphenyl) phosphite) and dibutyltin dilaurate (DBTDL), b) ribbon extrusion, c) stamping out dog-bone specimens, d) crosslinking using water treatment to obtain PEX-b material, e) hot set test and f) tensile test performed on the final PEX-b material

a) 3000 g of LLDPE, 60 g of Irganox 1010, 30 g of Irgafos 168 and 30 g of DBTDL were mixed in a plastic bag and dosed into a twin screw ZK35, 32D compounder (Collin) with compounding speed of 15 kg/h. Additive masterbatch pellets was collected.

b) For the ribbon extrusion, an amount of 380g for each pregraft compound was mixed with 20 g of additive masterbatch and dosed into an Extruder FT E20T-MP-IS (Collin) with rotation speed 180 rph and pressure 159 bar. Ribbons with a thickness of 1.40 ± 0.05 mm were obtained.

c) A cutting press was used to stamp out dog bone specimens from the obtained ribbons following ISO 527-2 for the dimensions of the test specimens.

d) Crosslinking was done by immersing stamped out dog bone specimens in a 95 °C water bath for 16 hours.

e) Hot set tests were carried out on the PEX-b dog bone specimens according to BS EN 60811-507 to characterize the high temperature behavior of the specimens at 200°C by applying 20 N/cm2 for 15 minutes. For each preparation / specimen type, three samples were tested, their hot elongation values recorded and averaged to obtain average values.
f) Tensile tests were performed on specimens to study the tensile properties of the obtained PEX-b materials. Each composition was tested five times to obtain average tensile stress and tensile strain (elongation at break) values from which tensile modulus and elongation at break were extracted. Characterization results of materials made according to Examples 1 through 5 are summarized in the table below.

| Example / silane loading [phr] | Elastic modulus [MPa] | Rupture strength [Mpa] | Elongation at break [%] | Hot Elongation [%] | Grafting catalyst / compound concentration [ppm] | Silane blend type |
|---|---|---|---|---|---|---|
| Example 1a / 0.6 | 214.2 | 24.7 | 412 | 123.3 | none / - | |
| Example 1b / 0.7 | 212.2 | 24.1 | 392 | 83.3 | none / - | Monomeric vinylsilane |
| Example 1c / 0.8 | 197.4 | 22.3 | 362 | 73.3 | none / - | |
| Example 1d / 0.9 | 194.4 | 21.9 | 346 | 60.0 | none / - | |
| Example 1e / 1.0 | 189.4 | 21.4 | 336 | 55.4 | none / - | |
| Example 2a / 0.6 | 222.0 | 24.4 | 410 | 75.0 | TTIP / 2.5ppm | Monomeric vinylsilane |
| Example 2b / 0.9 | 205.8 | 21.9 | 327 | 43.3 | TTIP / 2.5ppm | |
| Example 3a / 0.63 | 239.0 | 24.5 | 405 | 82.6 | TTIP / 0.5ppm | Monomeric vinylsilane + Q-T vinylpolysiloxane |
| Example 3b / 0.95 | 220.2 | 21.9 | 331 | 41.7 | TTIP / 0.5ppm | |
| Example 4a / 0.6 | 245.1 | 24.9 | 432 | 56.7 | TTIP / 1.3ppm | Monomeric vinylsilane + Q-T vinylpolysiloxane |
| Example 4b / 0.9 | 228.4 | 23.2 | 417 | 30.8 | TTIP / 2.0ppm | |
| Example 5a / 0.6 | 229.6 | 24.6 | 425 | 46.7 | TTB / 1.8ppm | Monomeric + oligomeric vinylsilane |
| Example 5b / 0.75 | 218.4 | 23.8 | 388 | 38.2 | TTB / 1.8ppm | |
| Example 5c / 0.9 | 209.4 | 22.7 | 354 | 25.6 | TTB / 1.8ppm | |

**Example 7:** Procedure for evaluating the effectiveness of a transition metal grafting catalyst.

PE pregraft compounds were made from LLDPE (linear low-density polyethylene pellets, BPD3642 (INEOS)) and using Dynasylan® Silfin 13 (Evonik industries) at 0.6 phr silane content at varying transition metal catalyst concentrations.

To do so, individual graft compounds were prepared by combining 1986.7 g of LLDPE pellets with 13.3 g of Dynasylan® Silfin 13 and a desired amount of 1%W model catalyst solution followed by homogenizing the mixture in a closed plastic bag for 3 minutes. The polymer is then compounded using a standardized compounding procedure. In this way, a concentration series of the candidate model grafting catalyst is then prepared to cover a relevant range of effective concentrations (in weight ppm with respect to the total polymer pregraft compound) for each catalyst candidate.

The resulting pregraft compounds are then extruded in the form of ribbons with a masterbatch containing the

condensation catalyst and standard antioxidants / additives. Test specimens are then cured in a water bath and characterized according to a test protocol, e.g. in the way described in Example 6.

In the following, three different model catalyst compounds, namely

a) Chromium acetylacetonate Cr(II)$(AcAc)_2$ - CAA
b) Titanium ethoxide Ti(IV)$(OEt)_4$ - TEO
c) Zirconium dichloro diacetate Zr(IV)$Cl_2(OAc)_2$ - ZdCdA

were subjected to the testing protocol, with the results being summarized in the table below. It can be seen that the first model catalyst does not show the expected change in the respective hot elongation and dosage response over the desired concentration range, and hence is inactive. The second and third candidates are however active at low levels of concentration already and hence are active as grafting catalysts. Note that the change in to elongation percentage for both samples at 1weight ppm dosing in the final composite is roughly 1-(52/120) = 56.6% for TEO and 1-(77/120) = 35.8% for ZdCdA, which is significantly above the required 10% and 20% respective hot elongation improvements defined as benchmark cutoffs for suitable grafting catalysts.

| Model catalyst | Hot Elongation [%] | Model catalyst concentration [ppm] | Model catalyst candidate activity |
|---|---|---|---|
| CAA | 118.9 | 0.1 | Not active |
| CAA | 119.4 | 0.5 | |
| CAA | 121.4 | 1.5 | |
| CAA | 116.8 | 5 | |
| CAA | 112.5 | 20 | |
| TEO | 115.6 | 0.1 | Active |
| TEO | 55.6 | 0.5 | |
| TEO | 48.7 | 1.5 | |
| TEO | 50.0 | 5 | |
| TEO | 95.4 | 50 | |
| ZdCdA | 122.6 | 0.1 | Active |
| ZdCdA | 76.8 | 1 | |
| ZdCdA | 61.5 | 3 | |
| ZdCdA | 64.5 | 15 | |
| ZdCdA | 82.9 | 50 | |

## Claims

**1.** A silane grafting mixture for crosslinking a thermoplastic polymer, the mixture comprising:

(i) at least one of:

(ia) a monomeric vinylsilane of the formula $CH_2$=CH-Si-$(OR^1)_3$, and/or
(ib) a dimeric vinylsilane of the formula

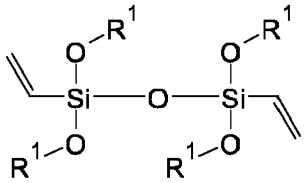

,

wherein $\mathbf{R^1}$ is selected from the group consisting of -Me, -Et, -nPr, -iPr, -nBu, - iBu, and -tBu;

(ii) a radical initiator, optionally an organic radical initiator, optionally an organic peroxide radical initiator, optionally dicumyl peroxide (DCP); and
(iii) a transition metal grafting catalyst, optionally a transition metal grafting catalyst comprising a transition metal selected from the group consisting of Ti, V, Zr, Hf, Bi, and Fe.

**2.** The silane grafting mixture according to claim 1, further comprising an oligomeric vinylsilane according to the formula:

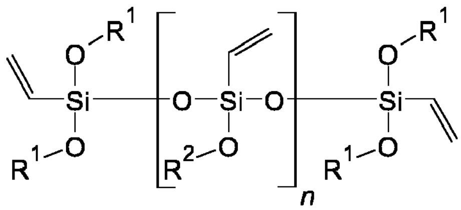

and/or a cyclic oligomeric vinylsilane according to the formula:

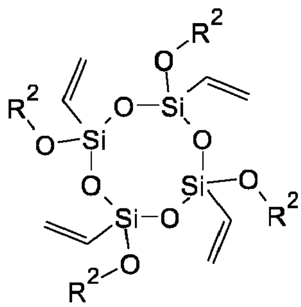

,

wherein $\mathbf{R^2}$ is selected from $R^1$,

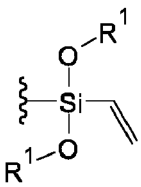

and

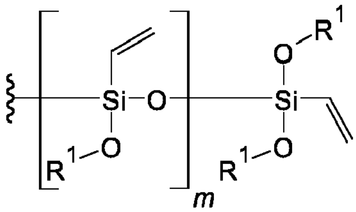

,

n is an integer from 1 to 10 and m is an integer from 1 to 4.

**3.** The silane grafting mixture according to claim 1 or 2, further comprising:
a polysiloxane material comprising

a. non-organofunctional Q-type siloxane moieties selected from the group consisting of:

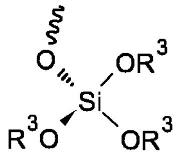 , 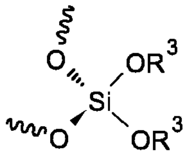 , 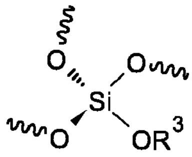 and 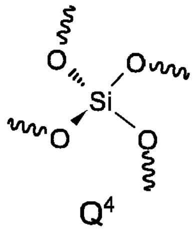 ;

$Q^1$ $Q^2$ $Q^3$ $Q^4$

b. optionally tri-organofunctional M-type siloxane moieties selected from the group consisting of:

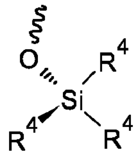 ,

M

c. optionally di-organofunctional D-type siloxane moieties selected from the group consisting of:

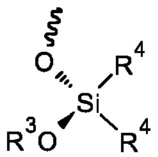 and 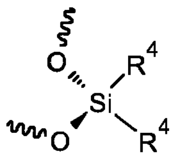 ,

$D^1$ $D^2$

and

d. mono-organofunctional T-type siloxane moieties selected from the group consisting of:

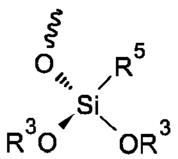 , 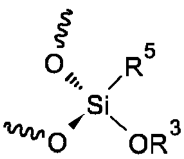 and 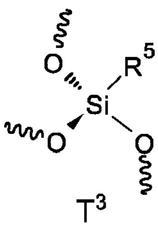 ;

$T^1$ $T^2$ $T^3$

wherein

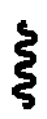 indicates a covalent siloxane bond to a silicon atom of another Q-, M-, D- and/or T-type moiety as defined in (a), (b), (c) and/or (d);

**$R^3$** is independently selected from the group consisting of methyl, ethyl and propyl, optionally methyl and ethyl;

**$R^4$** is independently selected from the group consisting of methyl, ethyl, phenyl, cyclohexyl, vinyl, and cyclopentadienyl; and

**$R^5$** is independently selected from the group consisting of $R^4$, linear or branched $C_{3-14}$ alkyl, $C_{3-14}$ alkenyl and $C_{3-14}$ alkynyl.

**4.** The silane grafting mixture according to claim 3, wherein for the polysiloxane material:

the degree of polymerization of the Q-type alkoxy-terminated moieties $DP_{Q\text{-type}}$ is in the range of 1.3 to 2.7;
the degree of polymerization of the D-type alkoxy-terminated siloxane moieties $DP_{D\text{-type}}$ is in the range of 1.0 to 1.9;
the degree of polymerization of the T-type alkoxy-terminated siloxane moieties $DP_{T\text{-type}}$ is in the range of 1.1 to 2.7;
the total content of tri-organofunctional M-type siloxane moieties (b) in the polysiloxane material does not exceed 10 mol-%, optionally does not exceed 5 mol-%;
the total content of di-organofunctional D-type siloxane moieties (c) in the polysiloxane material does not exceed 5, 10, or 15 mol-%;
the material has a viscosity in the range of 3 to 5000 cP, optionally 4 to 1000 cP, optionally 5 to 100 cP;
the material comprises less than 5, 2.5, 2, 1.5, 1 or 0.5 mol-% silanol groups (Si-OH); and/or
the atomic ratio of T- to Q-moieties in the material is in the range of 0.01:1 to 1:1.

**5.** The silane grafting mixture according to any of claims 1 to 4, wherein said mixture comprises at least 75 mol%, optionally at least 85% optionally at least 93% monomeric vinylsilane of the formula $CH_2=CH\text{-}Si(OR^1)_3$, and optionally wherein the total amount of oligomeric and/or dimeric vinylsilanes relative to all vinylsilanes in the grafting mixture is about or less than 20 mol%, 10 mol%, or 5 mol%.

**6.** The silane grafting mixture according to any of claims 1 to 5, wherein the grafting mixture comprises at least 30 mol-ppm, optionally at most 10’000 mol-ppm, optionally between 100 to 1000 mol-ppm of the transition metal grafting catalyst, wherein the mol-ppm are relative to the total mol number of Si atoms in the silane grafting mixture.

**7.** A method for producing a pregraft compound comprising the steps of:

(a) providing a composition comprising at least one thermoplastic polymer, optionally at least one polyolefin, a polyvinyl ester or mixtures thereof,
(b) adding the silane grafting mixture according to any of claims 1 to 6, and
(c) mixing the components of (a) and (b) to form a pregraft compound, wherein part or substantially all of the vinyl groups of the silane grafting mixture form a covalent bond with the carbon atoms of the at least one thermoplastic polymer.

**8.** The method according to claim 7, wherein the transition metal grafting catalyst is present in steps (b) and (c) in an amount of 0.1 to 100 mg, optionally 0.2 to 60 mg, optionally 0.25 to 25 mg per kg of total amount of polymeric material in the pregraft compound.

**9.** The method according to claim 7 or 8, wherein
the at least one thermoplastic polymer is selected from polyethylene, optionally linear low density polyethylene (LLDPE), polypropylene, polybutylene, polyisobutylene, polymethylpentene, poly(ethylene-co-vinyl acetate), polyvinyl acetate, polyvinylchloride, polyacrylonitrile, optionally C4-LLDPE, C6-mLLDPE, C8-ultra low density polyethylene (C8-ULDPE), C4-very low density polyethylene (C4-VLDPE), Heterophasic polypropylene-ethylene-propylene rubber (PP-EPR), PE/PP copolymer, ethylene acrylic elastomer (AEM), and mixtures thereof.

**10.** The method according to any of claims 7 to 9, further comprising at least one of the steps:

(d) adding and mixing a stabilizer and/or an antioxidant, optionally an organo-phosphite stabilizer and/or a phenolic antioxidant, and/or
(e) forming an extruded or molded part with the mixture of (c) or (d).

**11.** The method according to any of claims 7 to 10, further comprising the steps of adding a condensation catalyst, optionally an organometallic tin(IV)-based condensation catalyst, optionally dibutyl tin dilaurate (DBTDL), optionally an organosulfonic acid condensation catalyst, optionally during step (b) or (c), optionally during step (d) or (e).

**12.** A method for producing a composition comprising at least one crosslinked thermoplastic polymer, optionally a crosslinked polyolefin and/or polyvinyl ester, comprising the steps according to any of claims 7 to 11, wherein the method further comprises the step of exposing the extruded part or molded part of step (e) to water, optionally at temperatures of about 60 to 100 °C, to crosslink the at least one thermoplastic polymer.

**13.** The method according to claim 12, wherein during steps (b) or (c) at least one filler is added, wherein the filler

optionally comprises at least one component selected from the group consisting of aluminum hydroxide, magnesium hydroxide, talcum, chalk, wollastenite, huntite, boehmite and calcium carbonate, and/or
wherein the composition of step (a) comprises

(i) polyethylene, optionally linear low density polyethylene (LLDPE), polypropylene, polybuten, polyisobutylene, polymethylpentene, and
(ii) a polymer selected from the group consisting of polyvinyl acetate, poly(ethyleneco-vinyl acetate), polyvinylchloride, polyvinylalcohol, and polyvinylbutyral.

**14.** A pregraft compound, optionally an extruded or molded pregraft compound, optionally an extruded or molded pregraft compound, obtained or obtainable by the method according to any of claims 7 to 11.

**15.** A composition comprising at least one crosslinked thermoplastic polymer, optionally a crosslinked polyolefin and/or polyvinyl ester, obtained or obtainable by the method according to claim 12 or 13.

Europäisches Patentamt
European Patent Office
Office européen des brevets

# EUROPEAN SEARCH REPORT

Application Number
EP 22 16 4617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 100 457 798 C (UNIV ZHEJIANG TECHNOLOGY [CN]) 4 February 2009 (2009-02-04) * embodiments 1-7 * ----- | 1,5-15 | INV. C08F255/02 |
| X | WO 2021/076090 A1 (COOPER STANDARD AUTOMOTIVE INC [US]) 22 April 2021 (2021-04-22) * paragraphs [0074], [0100] * ----- | 1,7, 9-11, 13-15 | |
| X | CN 106 380 140 A (BENGBU BAOYUN COMMERCIAL CONCRETE CO LTD) 8 February 2017 (2017-02-08) * claim 9, examples 3-5 * ----- | 1 | |
| A | WO 2019/005439 A1 (DOW GLOBAL TECHNOLOGIES LLC [US]) 3 January 2019 (2019-01-03) * claims; examples * ----- | 1-15 | |

TECHNICAL FIELDS SEARCHED (IPC)

C08F

The present search report has been drawn up for all claims

1

| Place of search | Date of completion of the search | Examiner |
|---|---|---|
| Munich | 2 September 2022 | Degrendel, Magali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 16 4617

This annex lists the patent family members relating to the patent documents cited in the above-mentioned European search report. The members are as contained in the European Patent Office EDP file on
The European Patent Office is in no way liable for these particulars which are merely given for the purpose of information.

02-09-2022

| Patent document cited in search report | | Publication date | Patent family member(s) | | Publication date |
|---|---|---|---|---|---|
| CN 100457798 | C | 04-02-2009 | NONE | | |
| WO 2021076090 | A1 | 22-04-2021 | NONE | | |
| CN 106380140 | A | 08-02-2017 | NONE | | |
| WO 2019005439 | A1 | 03-01-2019 | BR 112019026999 | A2 | 30-06-2020 |
| | | | CA 3069289 | A1 | 03-01-2019 |
| | | | CN 110770853 | A | 07-02-2020 |
| | | | EP 3646349 | A1 | 06-05-2020 |
| | | | JP 2020525572 | A | 27-08-2020 |
| | | | KR 20200023374 | A | 04-03-2020 |
| | | | RU 2020100898 | A | 14-07-2021 |
| | | | US 2020207972 | A1 | 02-07-2020 |
| | | | WO 2019005439 | A1 | 03-01-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3646155 A
- US 4117195 A
- EP 3734617 A1
- WO 2019234062 A1
- WO 2021115646 A
- WO 2021116333 A
- WO 2021116334 A


### Non-patent literature cited in the description


- *Nanoscale,* 2010, vol. 2, 829-843
- *Nanoscale,* 2011, vol. 3, 5120-5125
- *Macromolecules,* 2006, vol. 39 (5), 1701-1708